(19)

Europäisches
Patentamt
European
Patent Office
Office européen
des brevets

(11)     **EP 2 336 957 A1**

(12)                              **EUROPEAN PATENT APPLICATION**

(43) Date of publication:
**22.06.2011 Bulletin 2011/25**

(51) Int Cl.:
***G06Q 10/00*** *(2006.01)*

(21) Application number: **10179394.1**

(22) Date of filing: **24.09.2010**

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**
Designated Extension States:
**BA ME RS**

(30) Priority: **24.09.2009 GB 0916811**

(71) Applicant: **Vodafone Group PLC
Newbury
Berkshire RG14 2FN (GB)**

(72) Inventor: **Carter, Phillip
Newbury, Berkshire RG14 2FN (GB)**

(74) Representative: **Keston, David Arthur
Vodafone Group Services Ltd.
Group Legal (Patents)
Vodafone House
The Connection
Newbury
Berkshire RG14 2FN (GB)**

(54)     **Ranking communications events**

(57)     To ensure that contacts (and other information) are presented to the user of a communications terminal in a manner that approximates the perceived relative importance a human user might assign, there is described a method for ranking contacts relative to one another on the basis of a ranking value that has been generated from timeline activities (such as tweets, blog posts, RSS feed, emails/SMS etc.), and/or status information (presence, location etc. of the contact) and/or trends in such activities/status values. This ranking method may be supplemental to more conventional rankings such as alphabetic ordering of contacts or ordering by edit date.

*Fig 1*

**EP 2 336 957 A1**

**Description**

The present invention relates to a system and method for ranking communications events according to their relevance to a recipient.

Many computer applications allow the user to construct an address book of the user's contacts. Mobile terminals such as cellular telephones have for many years allowed the manual construction and storage of a similar "contacts list".

In conventional contacts lists, all entries in the contacts list were at some point either entered directly by the user or imported from other sources such as databases.

More recent developments in mobile and fixed computing (loosely referred to as "Web 2.0") have lead to a growth in the interconnectedness of social data (such as contact information) and a matching creativity in the uses that are made of such data. There are now many web-based social networking services (SNS) that provide subscribers with streams of events that describe changes to the social data stored in that service.

In addition, the users of mobile (and fixed) networked devices are presented with an ever wider range of sources of communication: including voice and video calls (whether they stem from a cellular communications network, landline telephony, or indeed a Voice over IP (VoIP) technology), email, SMS, MMS, Instant Messaging, web feeds (e.g. RSS, Atom), web logs (e.g. blogs, vlogs), podcasts, and micro-blog posts (e.g. "tweets" on Twitter [RTM]). Further information is often associated with contacts such as: their location (e.g. whether user-defined, GPS generated, or network generated - using Cell-ID and/or a multilateration technique); calendar status (e.g. 'meeting with X scheduled for ...'; Y's birth date); network presence; and/or current network conditions for that contact (e.g. the radio access technology available to the contact at a given instant).

Users quite naturally expect to be able to collate the information from social networking services with status information as well as information they have input themselves about their connected contacts.

As a user engages with many different information sources and builds up a social network of contacts through those sources, the problem of how to maintain socially meaningful connections with the gathered contacts becomes intrusive.

As a result, there is a need for a computer-implemented mechanism for determining relative importance for certain contact information in a manner that approximates the perceived relative importance a human user might assign. It is an object of the invention to address this need and to obviate or at least mitigate the above problems.

The term used hereafter to refer to this perceived relative social importance is "social proximity" or contact ranking.

In accordance with one aspect of the present invention, there is provided a method for generating ranking values for a plurality of contacts, the method comprising: providing at least one proximity metric for each of the contacts, each proximity metric including data corresponding to one or more communication events associated with a respective contact; generating a ranking value for each of said contacts as a function of the or each proximity metric; and ranking the contacts relative to one another on the basis of said ranking value.

Preferably, at least one of the proximity metrics is a metric of timeline activity and the ranking value is an activity weighting value.

In such cases the timeline activity of any given contact may be used to classify said contact and contacts that have been classified in a first timeline activity classification may be ranked lower than contacts that have been classified in a second timeline activity classification.

Alternatively or additionally, the metric of timeline activity may include metrics of plurality of distinct types of timeline activity and wherein timeline activity of a first type is ranked lower than timeline activity of a first type. Timeline activity of the first type may then be ranked lower than timeline activity of a first type by applying a lesser weight to the timeline activity of the first type.

An alternative or supplemental proximity metric may be a metric of status information.

The method conveniently further includes presenting the user with a selectable group of proximity metrics and receiving a user selection from amongst said selectable group of metrics, and the step of ranking the contacts may then include ranking the contacts on the basis of the user selection thereby allowing the user to assemble contacts in a manner most appropriate or relevant to him.

It may be preferable that the method further includes filtering, under the control of the user, communication events with which each proximity metric is associated, thereby allowing the user to set which events are used to provide said proximity metrics.

Conveniently, the method may further include, upon receipt of a wipe message, erasing said ranking.

The method may further include providing a user interface whereby user modification of the contact ranking is facilitated.

In such cases, the user modification preferably includes overriding a calculated ranking for a given contact with a ranking derived from user policy with respect to communication events associated with said contact. The method may then further comprise adapting the ranking applied to contacts in response to patterns of user modification and/or user selection of proximity metric, thereby better approximating the user relevance of different activity trends.

In accordance with another aspect of the present invention, there is provided a system for generating ranking values for a plurality of contacts, the system comprising: at least one proximity metric source, which transmits proximity metric data for each of the contacts, each proximity metric including data corresponding to one or more communication events associated with a respective contact; processing means for receiving the or each proximity metric and generating a ranking value for each of said contacts as a function of the or each proximity metric, whereby the contacts may be ranked relative to one another on the basis of said ranking value.

For a better understanding of the present invention an embodiment will now be described by way of example, with reference to the accompanying drawings, in which:

Figure 1 illustrates the 'timeline' characteristics for different contact type profiles;
Figure 2 shows a communications manager architecture on the network core and mobile terminal within which the contact ranking of the invention may be implemented;
Figure 3 shows, in more detail, the communications management architecture of Figure 2 as implemented on the mobile terminal; and
Figure 4 shows, in more detail, the communications management architecture of Figure 2 as implemented in the network core.

Proximity metrics may be classified as "timeline" metrics (which plot events - particularly communication events - against a timeline); "status" metrics (including webfeeds from social networking sites, community broadcasts, as well as location and network presence) and "contact" metrics (such as the information stored in a generalised, "connected" Address Book collated from user input data and contacts/friends data originating in the different networking services to which the user has subscribed).

Examples of specific proximity metrics may include: Personalised web feeds; SNS information; feeds from media applications (e.g. 'John is now listening to...'); messages received and sent; video/voice calls received and sent; location; age; subscriptions to groups etc ...

Clearly, a user may also place more significance on certain contacts (e.g. favourites, family members) and events (e.g. calls as opposed to micro-blog posts).

The step of generating a ranking value for each of said contacts as a function of the (or each) proximity metric may implement a default "baseline" algorithm to determine social proximity.

$$Contact\_rank\_by\_timeline = A\_list\_weighting \times \left( \frac{\sum\limits_{n}^{n-1} timeline\_activities + (0.25 \times \sum\limits_{n-1}^{n-7} timeline\_activities)}{\sum\limits_{n}^{n-30} timeline\_activities} \right)$$

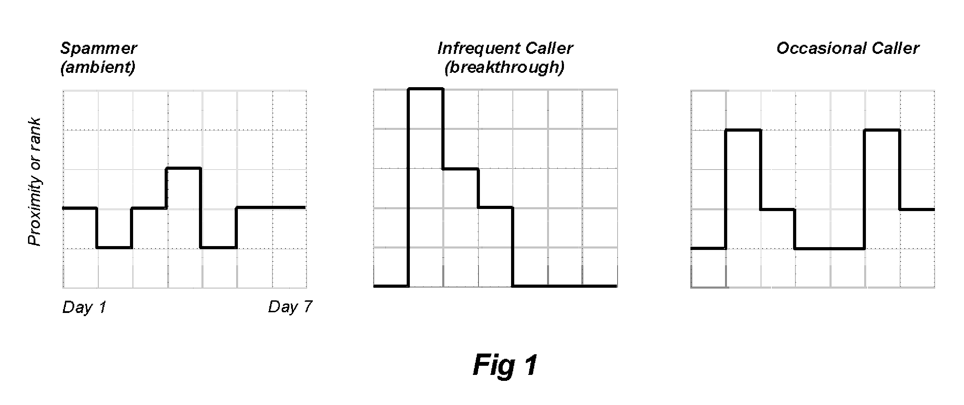

The ranking value then is a function of all timeline activities. Timeline activities taking place within the last day and to a lesser extent over the preceding week are compared to the longer term activity of the contact (over a period of 30 days): an activity weighting value is thus generated. As can be seen in Figure 1, this algorithm will treat contacts that have different communication timeline characteristics differently (compare the profiles in Figure 1 for a spammer, and infrequent/breakthrough caller and an occasional caller)

In certain implementations, different types of timeline activity may be differently weighted (e.g. timeline_activities (calls) > timeline_activities(SMS) > timeline_activities(email) > timeline_activities(IM)).

The above algorithm also allows for favourite contacts, 'A Listers', to be weighted so that they stay around for longer (through a higher value of A_list_weighting).

As a result the above algorithm, ranks contacts according to their activity and creates an ambient view of the most active users ('spammers' are less prominent than less frequent/persistent callers). The algorithm thus allows occasional callers to 'breakthrough' (to become at least for a time more prominent in terms of ranking) and fade gracefully.

Social proximity in this algorithm is defined by the most active contacts weighted by user and activity type preferences.

The step of generating a ranking value for each of said contacts as a function of the (or each) proximity metric need not be restricted to a single algorithm. Instead, it is preferred that the user is presented with a choice of algorithms each with different detailed operations and delivering different relative rankings so that the user can assemble his contacts in a manner most appropriate or relevant to him.

In addition to the above "baseline" algorithm, an alternative or additional algorithm may be derived from status information rather than timeline activity.

$$Contact\_rank\_by\_status = \left( \frac{\sum\limits_{n}^{n-1} status\_activities + (0.25 \times \sum\limits_{n-1}^{n-7} status\_activities)}{\sum\limits_{n}^{n-30} status\_activities} \right)$$

The ranking value in this algorithm is a function of status activity metrics (social network feeds, location, presence etc.). Status metrics for the user current in the last day and to a lesser extent over the preceding week are compared to the longer term view of the contact status (over a period of 30 days): a status weighting value is thus generated. If the proximity metric were for example "percentage presence reported as online" - a user who is present all day in the current day will be weighted higher than one who was a week ago but has since been offline.

Consequently, this algorithm creates an ambient view of the contacts that have the most active 'status'. Ambient status contacts are determined by contact status history over the previous 30 days (with rank being based on learnt behaviour).

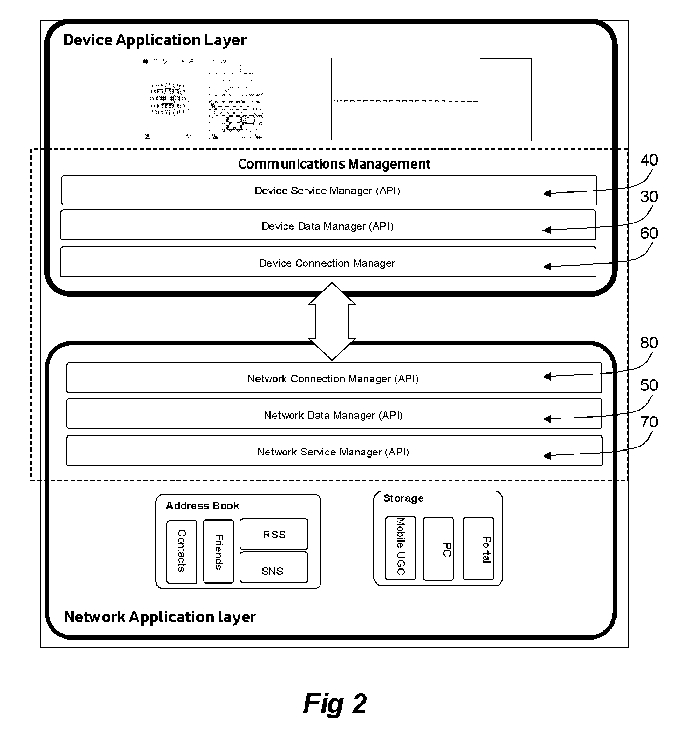

Figure 2 illustrates a suitable communications management architecture upon which the contact ranking service above may be implemented. The architecture can be characterised its handling of:

- A set of events that describe changes across a "connected" Address Book, Personalised Internet Feeds, Social Networks and within media applications e.g. *'John is now listening to ...'*
- Storage of these events and related content across both PC and mobile terminal (device).
- Requests for information; either data objects within the Connection Manager system or user content.

It is these features that are designed to combine and deliver a compelling and differentiated user experience.

Owing to the diverse characteristics of various information sources, the service platforms that derive them and the performance demands required by the end user, careful consideration needs to be given to the management of data and its delivery, especially to mobile devices. A Communications Management (CM) component is provided to address this need. The purpose of CM is to provide:

- a consistent set of service APIs on the device and network for any authorised application,
- a data management capability that minimises connection demands and ensures that data is available "on demand" through intelligent caching for any authorised application, and,
- a connection management function that maximises the use of SMS datagrams, minimising the use of mobile radio packet data connections and subsequent UE impact.

The principle drivers for CM are derived from the Address Book, Personalised Internet and Social Network use cases (events) delivered to mobile - since they are the most "chatty". The CM therefore comprises an engine upon which all other applications, such as Storage, can build on. Given the unknown behaviour of the system that drives these events (e.g. the number of social network service (SNS) events) it is also important that the CM engine and the algorithms that drive it are sufficiently parameterised to allow services to be tuned to optimise the user experience and resource usage (battery life and network).

The Communications Manager is provided in the network and the mobile device, and on each of these comprises three sub-components, as shown in Figure 2. Each sub-component is defined by a set of functions exposed through an API.

A first sub-component is a device service manager 40 and a corresponding network service manager 70. A second sub-component is a device data manager 30 and a corresponding network data manager 50. The third sub-component is a device connection manager 60 and the corresponding network connection manager 80.

The Communications model comprises three types of message:

1. Event Messages: one-way messages from the device to network or network to device, typically invoked to notify subscribed applications of changes to data objects e.g. contacts and profiles.
   Events and their priorities are classified as follows:

   (a) Application Events. Application event subscriptions are implicit and are generated whenever a change is made to an associated data object on the network or device e.g. the Address Book applications on the device and network are notified of any changes made to User Profile or Contact data objects. Applications Events are typically HIGH PRIORITY.

(b) User Subscribed Events. Internet (e.g. facebook, Flickr, YouTube etc.) and blog feeds require an explicit subscription to the relevant applications e.g. SNS aggregator service. Subscriptions to other user events are controlled by respective privacy settings maintained by each user. Each application thereby maintains a list of subscribed users who are notified via the Communications Manager when changes occur. User Subscribed Events are typically LOW PRIORITY and delivered on a best effort basis.

(c) Comms Events. These are defined within the user experience (e.g. Last SMS, Last call, New Email etc.) and are aggregated across the device and network, by the Communications Manager, Comms. Comms Events are also typically LOW PRIORITY. These events are also referred to as "timeline" events or activities.

2. Request Messages; messages initiated by an application as a direct result of a user action or "system" procedure that invoke a response from the network (i.e. HTTP request-response). The network response typically contains a predetermined data structure.
3. Control Messages; messages are required to maintain the algorithms that define the communications and service model.

The Communications Manager is a message proxy that sits between mobile and network applications. The communications model is defined by a Service API within the device and network respectively. The Device side APIs are used to construct the mobile end-user applications and the Network side APIs are designed to serve both PC clients (e.g. browsers) and network applications serving mobile users.
Device service APIs can be classified as either Event message or Request message generating. The management of Event, Request and Control messages is the responsibility of the Communications Manager. Wherever possible the Communications Manager preferably uses a compressed SMS datagram to transmit events to the network.
Events are routed by the Communications Manager to subscribed applications and users on the device and on the network.
Requests to the Service API are prioritised, queued, compressed and transmitted to the network using connection-oriented, acknowledged, packet data connections (cellular telecommunications or WiFi). Requests APIs are qualified by response data.
Control Messages are generated and used by the Communications Manager to provide a robust service to help the system recover from system exceptions and perform maintenance: for instance coverage outage recovery, system time sync and subscriber checks.
Request, Events and Control messages are created when a service API is called. The API groups may include:

Address Book APIs, Blog APIs, Registration APIs, Event APIs, Policies APIs, Identity APIs, Calendar APIs, Control APIs, Settings APIs, Storage APIs.

The Registration process with the Communications Manager is outlined here for completeness and to provide context and origins for system parameters that are used by the Communications Manager.
When a user first powers-on an appropriately enabled device or first invokes a downloaded Communications Manager client, the registration process includes a prompt for the user to enter their internet identities (usernames and passwords) and personalised feed URLs (e.g. www.flickr.com/feed/user). The SNS identities are subsequently used by the network to import internet contacts into the Address Book and create personalised feed entries in their profile. This registration process is enabled through the Registration API and identity API.
At the end of the registration process, the Communications Manager and other applications will have access to several system critical parameters, specifically;

- UserID and Password; used for HTTP connection authentication,
- IMSI; to verify SIM (and tariff validity)
- Registration Flag set; checked when the device is powered on.
- Operator List; to detect roaming conditions.
- Push Whitelist; used to authenticate network push messages.
- Personal Internet Feeds; used to create fields in the user profile.

The Communications Manager software implementation is preferably layered, with each layer clearly delineated by an API.
Noise Control allows the user to set which network originated events they want to receive, specifically:

- Friend profile and blog updates.
- Subscribed (friend's) internet feed updates e.g. www.flickr.com/feed/userID
- Social networking events e.g. facebook updates

These groups of events define filter parameters for the Noise Control API. The user settings for Noise Control are stored on the device and network and synchronised whenever a change is made.

The user can set permissions for different types of data on the device, specifically; contacts, MyProfile, MyBlog, MySharedFolder, MyCalendar. Permissions settings are stored on the device and network and synchronised whenever a change is made.

**Device Communications Management Architecture**

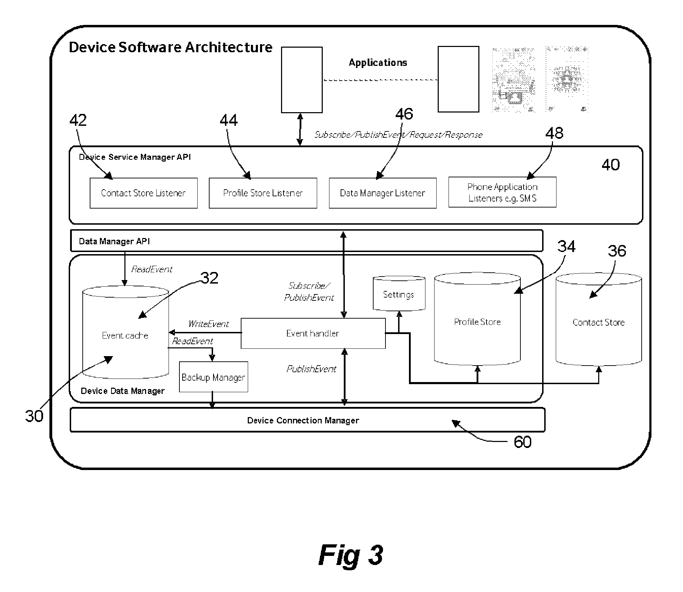

The Device Communications Management Architecture is shown in Figure 3.

Device Service Manager

The Device Service Manager 40 supports a set service APIs that create either Application Requests, Events or Control messages.

In order to create an event in response to a service API call the Device Service Manager 40 comprises "listener applications" that run in the background and listen for events on behalf of other applications. In turn, the listener applications subscribe to Network Application events published by network applications, via the Data Manager 50, and also Phone Application Events e.g. received SMS.

The Service Manager 40 supports Listeners for the following;

- Listener 42 for Contacts Store 36, detecting modifications by the Device and Network Address Books
- Listener 44 for Profiles Store 34, detecting modifications to My Profile and Friend profiles.
- Listener 46 for Event Cache 32, network originated modifications
- Listener 48 for Phone applications; SMS, Call Log, MMS, IM and Visual Voicemail
- Settings updates.

The Listeners, on receiving an event, notify subscribed applications, e.g. Homescreen, and write device-originated events to the Data Manager 30. The Data Manager 30 may also subscribe to the Service Manager listeners.

The following applications, where present, are typically permitted to use the Service APIs, subscribe and publish system events.

- Registration Wizard
- Address Book
- Calendar
- Homescreen
- Device LifeDrive (a timeline of events defined in the Noise Filter).
- IM Client.
- Integrated Messaging Client
- Visual voicemail client

The Service Manager 40 combines several data objects to define the Address Book data objects.

An Address Book data object comprises: both Profile and Contact data, for registered users; Contact data only, for unregistered users; and Last X events associated with a contact in the events cache.

Device Data Manager

The Device Data Manager 30, Figure 3, is responsible for;

- Handling device-originated events and updating either the Device Event Cache 32 or Network Address Book when either the User Profile or Contact Stores 34,36 are modified.
- Handling network-originated events and updating the Device Event Cache 32, Friend Profile in the Profile Store 34 and Contacts in the Contact Store 36.
- Backing-up all device originated Comms Events to the Network Store.
- Managing device and service settings

The Event Cache 32 is not infinite and only contains the most recent event updates. To compensate for this finite storage capability the cache is supported by a Network Event Store 52 (Managed by the Network Data Manager 50). The Device Data Manager 30 therefore needs to manage the periodic back-up of data to the Network Event Store 52 and retrieval of events not stored in the device cache (e.g. old events).

When the Event Cache 32 is full, the oldest events are discarded (from the bottom of the stack) and new Events are added (to the top of the stack).

When an application receives a request for an event that is not stored in the Event Cache 32 (e.g. an old event), the device returns the URL of the Network Event Store 52.

At EventCacheBackupTime intervals the Data Manager 30 backs up all device-originated events to the Network Event Store 52.

When a user, with an established Network Event Store 52, migrates to a new handset the device Event Cache 32 comprises no events.

If a device is lost, the network may send a DeviceWipe message and erase all end user data; Event Cache 32 Profile Store 34 Contacts Stored Messages and User Content.

The data manager 30 stores:

- Registration flag
- Username and password for authentication purposes.
- User IMSI
- Operator List
- Network time
- Push Whitelist
- Noise control settings
- Account permissions
- Connection Manager parameters
- Application certificates
- Software version

Device Connection Manager

The Device Connection Manager (DCoM) 60 provides reliable, optimised communication for the Data Manager 30 and end user applications. It is configurable and is also responsible for registration/authentication/update and storing control parameters received from the network.

The DCoM 60 also supports unfavourable communications states and informs the network when delivery should be suspended. This capability is important in maintaining Address Book synchronisation and allows any network originated changes to be stored and delivered at a later time. The specific conditions supported are:

- Lower Power
- Power Off
- Roaming
- Out of Coverage

All events are queued according to priority. All Address Book related events have the highest priority and shall be actioned immediately.

Given the data size of some events (e.g. Address Book contact field update), packet data connections are considered inefficient and may have a negative effect on the end user experience.

Where appropriate, the DCoM 60 shall use SMS to transfer data to and from the network. If the event payload size exceeds that maximum SMS payload a packet data connection shall be initiated (for example, by sending an SMS message to the mobile device 1 to activate a PDP context and to initiate the downloading of the data to the mobile device 1 in the manner described above). If there is no available PDP context and a packet connection is required the Connection Manager shall give priority to all Address Book events and close connections not in use by other applications to fulfil any device or network initiated update. All other updates shall wait until a free PDP context becomes available.

During Lower Power states the network may be required to suspend event delivery. When the device power level is critical, the DCoM 60 sends a SUSPEND message to the network. Conversely, when the device power recovers or is put on charge, the DCoM 60 sends a RESUME message to the network.

When the device is Powered Off the network will be required to suspend event delivery. Prior to the device being powered off the, the DCoM 60 shall send a SUSPEND message to the network. Conversely, when the device powers on, the DCoM 60 shall send a RESUME message to the network.

Because the device may be roaming, owing to the automatic retrieval and transmission of network and device originated events, the Connection Manager needs to support control triggers to allow the network to suspend delivery, or request user authorisation before a connection is made. The Connection Manager maintains a list of all networks within the special Tariff plan - [Operator List]. The device notifies the network when the registered device PLMN is not on the [Operator List]. The device exposes a tariff flag to device applications to inform users of the current registration state (and in turn tariff change). On receiving the PLMN message, the network may suspend event delivery.

When the device is out of coverage for a defined time the network is not aware that device has not received notifications. In the interim, the user may modify the Address Book via the web and phone Contact and Profile Stores may lose synchronisation.

When the device out of coverage for > [Coverage Time] and device coverage is recovered, the device sends a RESUME delivery message to the network.

On receiving the RESUME message the network delivers all queued events.

Advantageously, the Connection Manager removes duplicate events before passing to the Data Manager 30.

Preferably, on each data connection, the network checks the current software version and initiates a software update if a new version is available.

### Network Communications Manager Architecture

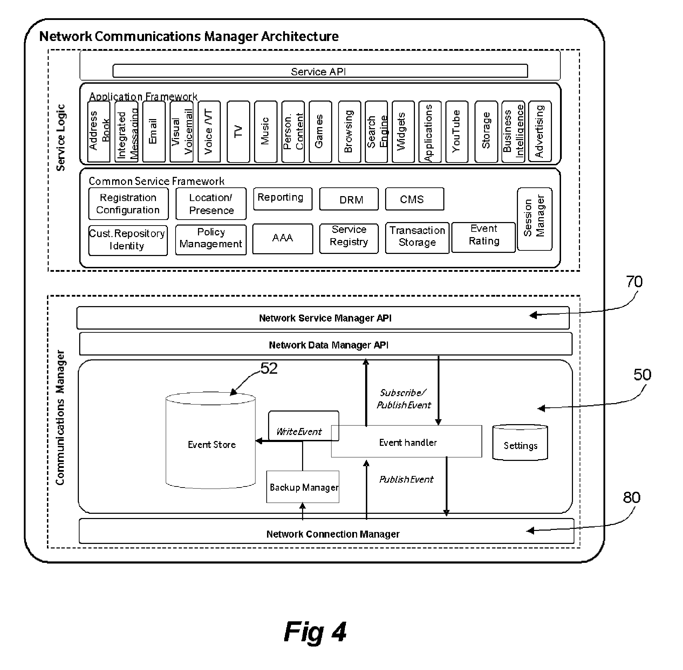

The Network Communications Manager architecture is shown in Figure 4. The Network Communications Manager is a high capacity, scalable, resilient, concurrent message handling system capable of serving millions of mobile clients. The Network Communications Manager must be able to handle concurrent messaging with registered mobile devices.

#### Network Service Manager

A key difference between the network side architecture and the device-side architecture is that the network-side applications are modular and functions are not shared across the device software platform e.g. the contact store in the Address Book resides entirely within the application.

The Network Service Manager 70 subscribes to events from the Network Data manager 50 on behalf of authorised network based applications.

On receiving an event from the Network Data Manager 50, the Service Manager 70 filters the event and writes data using the relevant application service APIs.

#### Network Data Manager

The Network Data Manager 50 receives events from the Network Connection Manager 80 and Network Service Manager 70 and routes them to subscribed applications and users respectively. Events received from the Network Service Manager 70 are filtered according to the user Noise Control settings. The Data Manager 50 writes all network originated events to the network event store 52. The Data Manager 50 backs-up mobile originated Comms Events at EventCacheBackupTime intervals.

#### Network Connection Manager

The Network Connection Manager (NCoM) 80 provides reliable, optimised communication for the Data Manager 50 and end user applications. It maintains the configuration of device-side software and is responsible for registration/ authentication/update.

The NCoM 80 receives published events from the Data Manager 50 and schedules their delivery.

All events received from the Data Manager 50 are stored in the relevant (High and Low) priority queues to await delivery.

All Network Service Manager 70 originated events shall be stored in the Network Event Store 52.

For a given user, the NCoM 80 selects either SMS or Packet delivery based on the amount of data stored in the queue. The algorithm is identical to that used by the Device.

All events (Address Book updates, SNS updates etc.) have a validity time. If, for any reason, the event validity time (e.g. 3 days) expires, the Device Address Book(s) (profile and content stores) are refreshed when the device resumes service. The Network Connection manager 80 shall initiate the refresh on receiving a RESUME command from a registered device.

Non-Address Book events are discarded when the message validity time expires. The NCoM 80 removes duplicate events before passing to the Data Manager 50.

SMS updates use delivery reports to confirm receipt from the destination SMSC 22. If the deliver report is not received within DeliveryReportTimeout, the update shall be re-sent.

The NCoM 80 authenticates packet data connections using HTTP authentication methods. Device-originating SMS datagram authentication is implicit and uses the originating MSISDN. Network originated SMS datagrams shall be authenticated using the PushWhiteList.

Connection Manager Parameter Summary:

| Parameter | Description |
| --- | --- |
| CoverageTimer | Message trigger for delivery RESUME. |
| | Re-transmission timer for network and mobile |
| DeliveryReportTimeout | originated updates in the event of no SMS delivery report |
| OperatorList | List of PLMNs within the special tariff. |
| EventMessageExpiry | Time to live for all events. |
| EventCacheBackup Time | Interval between device event cache backups. Must be set to maintain cache underflow |
| PushWhiteList | Authorised network address. |

An example will now be described where the network stores an address book for the user of the mobile terminal. The address book is enhanced with rich contact information. For example, the address book may gather information about a particular contact from social community websites such as facebook and MySpace. The contact information in the user's address book may be shared with other users, so that when an entry is updated, the updated data is automatically propagated to the other user. The address book data needs to be synchronised with the mobile device of each relevant user.

Conventionally, such an arrangement would cause difficulties because changes made to the address book will occur sporadically. Additionally, to update the address book on the relevant user terminals, a message is sent from the network to the terminal to prompt the user to open an active packet data connection. It is an unsatisfactory user experience to be repeatedly prompted at random times to open an active packet data connection in order to synchronise an address book.

The network service manager 70 receives updates to the address book from various sources, such as from other users and from social community websites such as facebook and MySpace. The network data manager 50 writes the data into the network event store 52. The network data manager 50 then publishes the data to the network connection manager 80. The NCoM 80 prioritises the data by type. Updates to the address book will generally be given a relatively high priority. The data is then queued according to its priority and is transmitted by a suitable method (SMS or packet delivery) in dependence upon its priority and the amount of data in the queue.

Higher priority data can be sent by SMS almost in real time as it is received by the network service manager 70. Lower priority data can be sent periodically by establishing a packet data connection (for example once every 24 hours).

Advantageously, the network communication manager 80 is aware of the functionality provided by a user's handset and can modify how the data are transmitted to the mobile terminal and the format of the data in dependence upon the handset functionality.

As a result of the invention, updates from (or associated with) different contacts are harnessed to generate a corresponding contact ranking. Should the user wish to display his contacts, he may now be presented with a contacts list ordered in a manner that reflects socially (and personally) relevant issues. The contact list presentation can be changed to suit the user so that there may be more than one "view" of the same data: in addition to a traditional ranking (alphabetical or edit date ordering, for instance) the invention allows the contacts to be ordered by timeline and/or status activity. In addition, the invention allows the user to override this ranking by policy (e.g. boosting the contact in reaction to a certain type of event - such as a contact birthdate) or by specific rule (e.g. always "A-list" my business partner).

Clearly, the invention is not limited to the use of the specific algorithms given in the preceding examples. By viewing events that can be associated with a contact and examining trends in the occurrence of these events, the invention allows the generation of a "social proximity" parameter. The invention can be arranged to 'learn' to recognise the user relevance of different activity trends and can adapt the algorithm used to rank contacts accordingly. This learning process may incorporate the use of one or more algorithm to account for user circumstances (e.g. the user may make a strong distinction between Friends, Family and Business contacts) and taste.

**Claims**

1. A method for generating ranking values for a plurality of contacts, the method comprising:

    providing at least one proximity metric for each of the contacts, each proximity metric including data corresponding to one or more communication events associated with a respective contact; generating a ranking value for each of said contacts as a function of the or each proximity metric; and ranking the contacts relative to one another on the basis of said ranking value.

2. A method as claimed in claim 1, wherein at least one of the proximity metrics is a metric of timeline activity and the ranking value is an activity weighting value.

3. A method as claimed in claim 2, wherein the timeline activity of any given contact is used to classify said contact and wherein contacts that have been classified in a first timeline activity classification are ranked lower than contacts that have been classified in a second timeline activity classification.

4. A method as claimed in claim 2 or claim 3, wherein the metric of timeline activity includes metrics of plurality of distinct types of timeline activity and wherein timeline activity of a first type is ranked lower than timeline activity of a first type.

5. A method as claimed in claim 4, wherein timeline activity of the first type is ranked lower than timeline activity of a first type by applying a lesser weight to the timeline activity of the first type.

6. A method as claimed in any one of claims 1 to 5, wherein at least one of the proximity metrics is a metric of status information.

7. A method as claimed in any one of the preceding claims, the method further including presenting the user with a selectable group of proximity metrics and receiving a user selection from amongst said selectable group of metrics, wherein the step of ranking the contacts includes ranking the contacts on the basis of the user selection thereby allowing the user to assemble contacts in a manner most appropriate or relevant to him.

8. A method as claimed in any one of the preceding claims, the method further including filtering, under the control of the user, communication events with which each proximity metric is associated, thereby allowing the user to set which events are used to provide said proximity metrics.

9. A method as claimed in any one of the preceding claims, the method further including upon receipt of a wipe message, erasing said ranking.

10. A method as claimed in any one of the preceding claims, the method further including providing a user interface whereby user modification of the contact ranking is facilitated.

11. A method as claimed in claim 10, wherein the user modification includes overriding a calculated ranking for a given contact with a ranking derived from user policy with respect to communication events associated with said contact.

12. A method as claimed in claim 10 or claim 11, further comprising adapting the ranking applied to contacts in response to patterns of user modification and/or user selection of proximity metric, thereby better approximating the user relevance of different activity trends.

13. A system for generating ranking values for a plurality of contacts, the system comprising: at least one proximity metric source, which transmits proximity metric data for each of the contacts, each proximity metric including data corresponding to one or more communication events associated with a respective contact; processing means for receiving the or each proximity metric and generating a ranking value for each of said contacts as a function of the or each proximity metric, whereby the contacts may be ranked relative to one another on the basis of said ranking value.

14. A system as claimed in claim 13, wherein the system implements the method of any of claims 1 to 12.

Proximity or rank

Spammer
(ambient)

Day 1

Day 7

Infrequent Caller
(breakthrough)

Occasional Caller

Fig 1

**Device Application Layer**

**Communications Management**

Device Service Manager (API)

Device Data Manager (API)

Device Connection Manager

40

30

60

Network Connection Manager (API)

Network Data Manager (API)

Network Service Manager (API)

80

50

70

**Address Book**

Contacts

Friends

RSS

SNS

**Storage**

Mobile UGC

PC

Portal

**Network Application layer**

*Fig 2*

# Device Software Architecture

Applications

Subscribe/PublishEvent/Request/Response

42    44    46    48

**Device Service Manager API**    40

| Contact Store Listener | Profile Store Listener | Data Manager Listener | Phone Application Listeners e.g. SMS |

**Data Manager API**

34    36

*ReadEvent*

32

*Subscribe/ PublishEvent*

Settings

*WriteEvent*

Event cache    Event handler    Profile Store    Contact Store

*ReadEvent*

Backup Manager    *PublishEvent*

**Device Data Manager**

30

**Device Connection Manager**

60

# Fig 3

## Network Communications Manager Architecture

Service API

### Application Framework

Service Logic

Address Book | Integrated Messaging | Email | Visual Voicemail | Voice /VT | TV | Music | Person. Content | Games | Browsing | Search Engine | Widgets | Applications | YouTube | Storage | Business Intelligence | Advertising

### Common Service Framework

| Registration Configuration | Location/ Presence | Reporting | DRM | CMS | Session Manager |
| Cust. Repository Identity | Policy Management | AAA | Service Registry | Transaction Storage | Event Rating |

**70**

Communications Manager

Network Service Manager API

Network Data Manager API

52

Event Store

*Subscribe/ Publish Event*

*Write Event*

Event handler

Settings

*Publish Event*

Backup Manager

**50**

**80**

Network Connection Manager

## Fig 4

**Europäisches Patentamt**
**European Patent Office**
**Office européen des brevets**

## EUROPEAN SEARCH REPORT

Application Number

EP 10 17 9394

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/234874 A1 (SYLVAIN DANY [CA]) 17 September 2009 (2009-09-17) * figures 1,2,3a,3b,4,5 * * paragraph [0021] - paragraph [0039] * * abstract * ----- | 1-14 | INV. G06Q10/00 |
| X | US 2003/093483 A1 (ALLEN KRAM HENRY [US] ET AL) 15 May 2003 (2003-05-15) * abstract * * paragraph [0012] - paragraph [0015] * * figures 1,2 * ----- | 1-14 | |
| X | US 2009/228555 A1 (JOVIAK PAUL A [US] ET AL) 10 September 2009 (2009-09-10) * abstract * * figures 3,4 * * paragraph [0004] - paragraph [0007] * ----- | 1-14 | |
| | | | TECHNICAL FIELDS SEARCHED (IPC) |
| | | | G06Q |

The present search report has been drawn up for all claims

| Place of search | Date of completion of the search | Examiner |
|---|---|---|
| Munich | 3 March 2011 | Härdeman, David |

EPO FORM 1503 03.82 (P04C01)

## ANNEX TO THE EUROPEAN SEARCH REPORT
## ON EUROPEAN PATENT APPLICATION NO.

EP 10 17 9394

This annex lists the patent family members relating to the patent documents cited in the above-mentioned European search report.
The members are as contained in the European Patent Office EDP file on
The European Patent Office is in no way liable for these particulars which are merely given for the purpose of information.

03-03-2011

| Patent document cited in search report | | Publication date | Patent family member(s) | | Publication date |
|---|---|---|---|---|---|
| US 2009234874 | A1 | 17-09-2009 | WO | 2009112938 A2 | 17-09-2009 |
| US 2003093483 | A1 | 15-05-2003 | NONE | | |
| US 2009228555 | A1 | 10-09-2009 | NONE | | |

EPO FORM P0459

For more details about this annex : see Official Journal of the European Patent Office, No. 12/82